# EUROPEAN PATENT APPLICATION

(11) **EP 4 822 424 A1**
(43) Date of publication of application: **14.10.2026**
(21) Application number: 26171767.2
(22) Date of filing: 10.04.2026
(51) Int. Cl.: G02B 27/01, G02B 7/00, G02B 7/02

(54) **DROP PROTECTION MECHANISMS FOR DISPLAY ASSEMBLIES OF AUGMENTED-REALITY GLASSES**

(30) Priority: 11.04.2025 US 202563787618 P; 03.04.2026 US 202619639022
(71) Applicant: Meta Platforms Technologies, LLC, Menlo Park, CA 94025 (US)
(72) Inventor: HUANG, Gang, Menlo Park, 94025 (US); NOTHERN, Alga Lloyd, Menlo Park, 94025 (US); TSAI, Cheng-Hua, Menlo Park, 94025 (US); ZHANG, Jack, Menlo Park, 94025 (US)
(74) Representative: Murgitroyd & Company

(57) **Abstract**

A display assembly that includes a display projector assembly configured to provide visual information to a waveguide along a projection axis aligned with a display window of the waveguide is disclosed. The display assembly includes a lens coupled to the display projector assembly, where the lens is configured to dampen vibrations from the display projector assembly to the waveguide. The lens has a first material having a first shape with a first toughness, and the first shape of the lens exposes the display window of the waveguide to the display projector assembly. The waveguide is coupled to the lens and comprises a second material having a second shape with a second toughness, where the waveguide is configured to output the visual information. The first material has a greater toughness or greater thickness than the second material. A gap separates the display projector assembly from the waveguide along the projection axis.

## Description

### CROSS-REFERENCE TO RELATED APPLICATIONS

This application claims priority to U.S. Provisional Patent Application No. 63/787,618, filed April 11, 2025, entitled "Drop Protection Mechanisms for Display Assemblies of Augmented-Reality Glasses".

### TECHNICAL FIELD

This relates generally to drop protection mechanisms for display assemblies of augmented-reality glasses.

### BACKGROUND

Conventional construction of display assemblies of smart glasses directly couple a display projector assembly with a waveguide to present a smart-glasses experience. Such direct mechanical coupling of the display projector assembly and the waveguide can increase the likelihood of vibrations, drop impacts, and/or other forces reaching the waveguide, which can cause the waveguide to break (e.g., crack or shatter). Additionally, waveguides are traditionally constructed from glass, which provides desirable optical properties but are inherently more fragile than other materials used in smart glasses construction. This material disparity means that the waveguide is often the most vulnerable and expensive component in the display assembly.

As an example, during a drop event in which the smart glasses impact a surface, the display projector assembly may move relative to other components and directly impact the waveguide, causing the waveguide to crack or shatter. In another example, thermal stress during operation of the smart glasses can cause the display projector assembly and the waveguide to expand or contract at different rates due to their differing coefficients of thermal expansion. When the display projector assembly is directly mechanically coupled to the waveguide, this differential thermal expansion can induce stress concentrations at the coupling interface, which can cause the waveguide to crack over time or during thermal cycling events.

As such, there is a need to address one or more of the above-identified challenges. A brief summary of solutions to the issues noted above is described below.

### SUMMARY

The present invention provides a display assembly, a pair of smart glasses and a method of presenting visual information via a pair of smart glasses as defined in the appended claims.

As will be described in detail below, a solution to the issues recited above includes a display assembly that is configured with an extended lens that dampens vibrations and/or forces from reaching a waveguide of a pair of smart glasses, where the extended lens is more durable (e.g., of a material with greater toughness) than the waveguide.

In accordance with a first aspect, there is provided a display assembly, comprising:
a display projector assembly configured to provide visual information to a waveguide along a projection axis of the display projector assembly aligned with a display window of the waveguide;
a lens coupled to the display projector assembly, wherein:
   the lens is configured to dampen vibrations from the display projector assembly to the waveguide,
   the lens has a first material having a first shape with a first toughness; and
   the first shape of the lens exposes the display window of the waveguide to the display projector assembly;
   the waveguide coupled to the lens, the waveguide comprising a second material having a second shape with a second toughness, wherein:
      the first toughness is greater than the second toughness; and
      the waveguide is configured to output the visual information; and
      a gap separating the display projector assembly from the waveguide along the projection axis.

The first shape may comprise a cutout along the projection axis, such that the visual information is transmitted from the display projector assembly to the waveguide without passing through the lens.

The cutout may extend beyond a perimeter of the display window to reduce introduction of artifacts to the visual information.

The cutout may extend through the lens and at least a portion of the lens may surround a perimeter of the cutout.

The lens may comprise:
a first portion of the lens configured to pass visual information output by the waveguide; and
a second portion of the lens configured to dampen the vibrations to the waveguide, wherein the first portion of the lens has first material properties, and the second portion of the lens has second material properties distinct from the first material properties.

The first portion of the lens may have a first thickness, and the second portion of the lens may have a second thickness that is greater than the first thickness.

The display assembly may further comprise a mirror assembly configured to transmit optical information from the display projector assembly to the waveguide via one or more mirrors.

The lens and the display projector assembly may be coupled via a liquid optically clear adhesive.

The lens may adjust an image from the waveguide so that the visual information presented via the waveguide appears a specified distance from a user.

In accordance with a second aspect, there is provided a pair of smart glasses, comprising:
a frame;
a display projector assembly coupled to the frame and configured to provide visual information to a waveguide along a projection axis of the display projector assembly aligned with a display window of the waveguide;
a lens coupled to the frame and the display projector assembly, wherein:
   the lens is configured to dampen vibrations from the display projector assembly to the waveguide,
   the lens has a first material having a first shape with a first toughness, and
   the first shape of the lens exposes the display window of the waveguide to the display projector assembly;
the waveguide coupled to the lens and the frame, the waveguide comprising a second material having a second shape with a second toughness, wherein:
   the first toughness is greater than the second toughness; and
   the waveguide is configured to output the visual information; and
a gap separating the display projector assembly from the waveguide along the projection axis.

The first shape may comprise a cutout along the projection axis, such that light is transmitted from the display projector assembly to the waveguide without passing through the lens.

The cutout may extend beyond a perimeter of the display window to reduce introduction of artifacts to the visual information.

The cutout may extend through the lens and at least a portion of the lens may surround a perimeter of the cutout.

The lens may comprise:
a first portion of the lens configured to pass visual information output by the waveguide; and
a second portion of the lens configured to dampen the vibrations to the waveguide, wherein the first portion of the lens has first material properties, and the second portion of the lens has second material properties distinct from the first material properties.

The first portion of the lens may have a first thickness, and the second portion of the lens may have a second thickness that is greater than the first thickness.

The pair of smart glasses may further comprise a mirror assembly configured to transmit optical information from the display projector assembly to the waveguide via one or more mirrors.

The lens and the display projector assembly may be coupled via a liquid optically clear adhesive.

The lens may adjust an image from the waveguide so that the visual information presented via the waveguide appears a specified distance from a wearer of the smart glasses.

In accordance with a third aspect, there is provided a method of presenting visual information via a pair of smart glasses, the smart glasses comprising a frame, a display projector assembly, a lens, and a waveguide, the method comprising:
projecting, by the display projector assembly, visual information to the waveguide along a projection axis aligned with a display window of the waveguide, wherein the visual information is projected across a gap separating the display projector assembly from the waveguide along the projection axis;
presenting, via the visual information projected from the display projector assembly to the waveguide, a smart-glasses experience; and
dampening, via the lens, vibrations from the display projector assembly to the waveguide, wherein:
   the waveguide is coupled to the lens;
   the lens comprises a first material having a first shape with a first toughness;
   the first shape of the lens exposes the display window of the waveguide to the display projector assembly;
   the waveguide comprises a second material having a second shape with a second toughness; and
   the first material has a greater toughness than the second material.

The first shape may comprise a cutout along the projection axis, such that the visual information is transmitted from the display projector assembly to the waveguide without passing through the lens; the lens may comprise a first portion configured to pass the visual information output by the waveguide and a second portion configured to dampen the vibrations to the waveguide; and the first portion of the lens may have a first thickness, and the second portion of the lens may have a second thickness that is greater than the first thickness.

The devices and/or systems described herein can be configured to include instructions that cause the performance of methods and operations associated with the presentation and/or interaction with an extended-reality (XR) headset. These methods and operations can be stored on a non-transitory computer-readable storage medium of a device or a system. It is also noted that the devices and systems described herein can be part of a larger, overarching system that includes multiple devices. A non-exhaustive list of electronic devices that can, either alone or in combination (e.g., a system), include instructions that cause the performance of methods and operations associated with the presentation and/or interaction with an XR experience includes an extended-reality headset (e.g., a mixed-reality (MR) headset or a pair of augmented-reality (AR) glasses as two examples), a wrist-wearable device, an intermediary processing device, a smart textile-based garment, etc. For example, when an XR headset is described, it is understood that the XR headset can be in communication with one or more other devices (e.g., a wrist-wearable device, a server, an intermediary processing device) which together can include instructions for performing methods and operations associated with the presentation and/or interaction with an extended-reality system (i.e., the XR headset would be part of a system that includes one or more additional devices). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A and 1B illustrate a monocular display assembly of a pair of augmented-reality glasses, in accordance with some embodiments.
Figure 1C illustrates the pair of augmented-reality glasses including the monocular display assembly, in accordance with some embodiments.
Figure 2 shows an example method flowchart for manufacturing a display assembly, in accordance with some embodiments.
Figures 3A, 3B, 3C-1, and 3C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive, and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and/or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera that is setup in the surrounding environment)). "In-air" generally includes gestures in which the user's hand does not contact a surface, an object, or a portion of an electronic device (e.g., a head-wearable device or other communicatively coupled device, such as the wrist-wearable device); in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, on a couch, on a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, or strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)) is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, or other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein, biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; and (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage media that can be used to store electronic data in a non-transitory form (e.g., such that the data is stored permanently until it is intentionally deleted and/or modified).

### Drop Protection for Display Assemblies

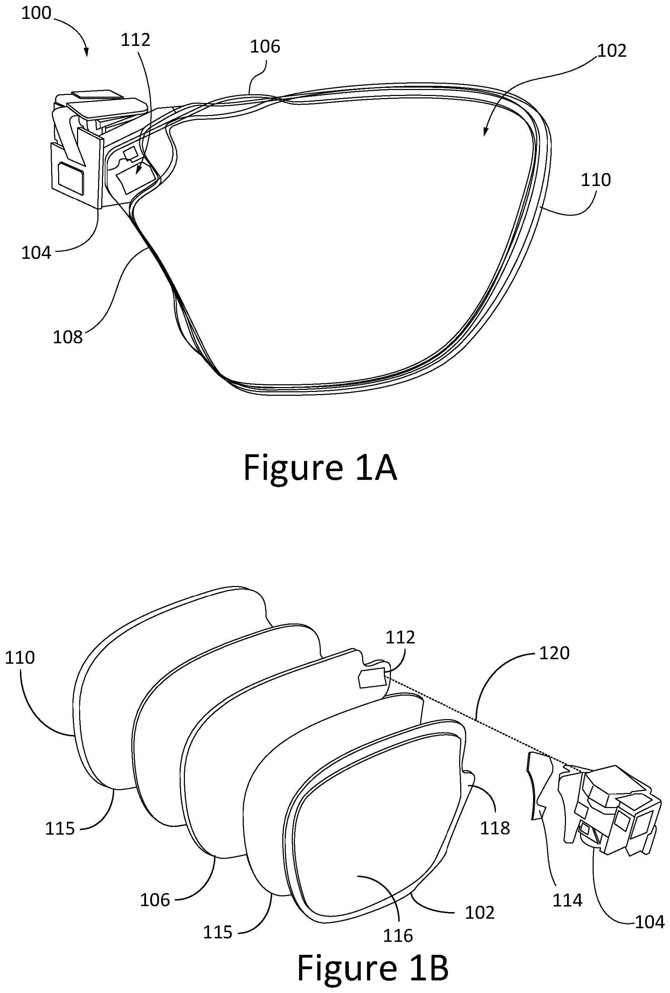

Figures 1A and 1B illustrate a monocular display assembly 100 of a pair of smart glasses, in accordance with some embodiments. The monocular display assembly 100 includes an optical stack comprising a VID1 lens 102, a waveguide 106, a VID2 lens 110, and a display projector assembly 104. The monocular display assembly 100 is configured to present a smart-glasses experience at the smart glasses. While a monocular display assembly is discussed herein, one skilled in the art would appreciate that a pair of smart glasses can include two monocular display assemblies each corresponding to a different eye of a user (e.g., another mirrored monocular display assembly is also present in the smart glasses). In some embodiments, the two monocular display assemblies are in communication with each other to produce binocular images/videos.

In some embodiments, the smart glasses are configured to present a smart-glasses experience to a wearer. The smart-glasses experience can include visual information that is output by the waveguide 106 and viewable by the wearer. The visual information can include virtual objects, user interface elements, notifications, media content, and/or other graphical content that enhances the wearer's interaction with the physical environment and/or digital content. The display projector assembly 104 generates the visual information and transmits the visual information to the waveguide 106, which then outputs the visual information toward the wearer's eye.

In some embodiments, the smart glasses are augmented-reality glasses configured to present augmented-reality content to a wearer. The visual information output by the waveguide 106 can include augmented-reality objects that are overlaid on the wearer's view of the physical environment. The augmented-reality objects can include virtual images, text, icons, notifications, user interface elements, and/or other graphical content that is presented in conjunction with the wearer's direct view of the surrounding environment through the transparent or semi-transparent waveguide 106 and/or lenses of the augmented-reality glasses.

In some embodiments, the display projector assembly 104 is optically coupled to the waveguide 106 at display window 112 so that images (or, more generally, light) from the display projector assembly 104 are received by the waveguide 106 of the optical stack, and the display projector assembly 104 is mechanically coupled to the VID1 lens 102 of the optical stack via an adhesive 114 (e.g., a liquid optically clear adhesive). In this way, the mechanical decoupling of the display projector assembly 104 from the waveguide 106 can increase the durability and longevity of the aforementioned components. For example, as shown in Figures 1A and 1B, the display projector assembly 104 is optically, and not mechanically, coupled to the waveguide via display window 112, and the display projector assembly 104 is mechanically coupled to the VID1 lens 102 via an adhesive 114. In this example, an airgap is between the display projector assembly 104 and the waveguide 106, which provides space for the display projector assembly to move without contacting or directly applying stress to the waveguide 106.

In some embodiments, the display window 112 is aligned with the display projector assembly 104 along a projection axis 120, such that visual information from the display projector assembly 104 is transmitted to the waveguide 106 along the projection axis 120. The projection axis 120 defines an optical pathway between the display projector assembly 104 and the display window 112 of the waveguide 106. In some embodiments, the projection axis 120 is substantially perpendicular to a surface of the waveguide 106 at the display window 112. In some embodiments, the projection axis 120 passes through the gap (e.g., an airgap) that separates the display projector assembly 104 from the waveguide 106, allowing visual information to be transmitted across the gap without physical contact between the display projector assembly 104 and the waveguide 106. This configuration enables the display projector assembly 104 to be optically coupled to the waveguide 106 while remaining mechanically decoupled from the waveguide 106, thereby reducing the transmission of vibrations and impact forces to the waveguide 106 during drop events or other mechanical disturbances.

In some embodiments, the VID1 lens 102 is a plastic lens that is configured to dampen vibrations or other forces from the display projector assembly 104 before they reach the waveguide 106. In this way, the forces experienced by the waveguide 106 are reduced. For example, during a drop event, movement of the display projector assembly 104 is directly received and dampened by the more durable plastic VID1 lens 102 instead of being directly received by the glass waveguide 106. Direct mechanical coupling of the display projector assembly 104 to the waveguide 106 can increase the likelihood of breaking (e.g., cracking or shattering) the waveguide 106.

In some embodiments, the VID1 lens 102 includes a cutout so that the display projector assembly 104 is directly optically coupled to the waveguide 106 (e.g., the light and/or images are sent from the display projector assembly 104 to the waveguide 106 without passing through the VID1 lens 102). In some embodiments, a size and dimension of the cutout is configured such that light can pass through unimpeded (e.g., without undesirable artifacts to the image displayed at the waveguide 106 from the display projector assembly 104) and dampens vibrations transmitted to the waveguide 106. For example, the size and dimension of the cutout approximately matches the size and dimensions of the display window 112. In this example, the shape of the display window is rectangular, and the shape of the cutout of the VID1 lens is also rectangular. In another example, the size and dimension of the cutout approximately is greater than the size and dimensions of the display window 112. In this example, as shown in Figures 1A-1B, the shape of the display window 112 is rectangular, and the shape of the cutout of the VID1 lens is an organic shape.

In some embodiments, the cutout having a size and dimension greater than the display window 112 reduces optical interference that could otherwise occur at the edges of the optical pathway. This larger cutout provides a buffer zone that prevents the material of the VID1 lens 102 from interacting with light traveling along the periphery of the projection axis, thereby improving image quality while still maintaining sufficient lens material to dampen vibrations transmitted to the waveguide 106.

In some embodiments, the display projector assembly 104 is mechanically coupled to the VID1 lens 102 via an adhesive 114. The adhesive 114 can be proximate to, or surrounding, the display window 112. The adhesive 114 can also mechanically couple the display projector assembly 104 to the waveguide 106 (in addition to mechanically coupling the display projector assembly 104 to the VID1 lens 102). In this embodiment, at least the portion of the adhesive 114 that covers the display window 112 is a liquid optically clear adhesive. The portion of the adhesive that does not cover the display window 112 (e.g., the portion of the adhesive that is at the VID1 lens) can be the same liquid optically clear adhesive, or can be an opaque adhesive.

In some embodiments, the VID1 lens 102, the waveguide 106, and the VID2 lens 110 are coupled together via adhesive 115. The adhesive can include a liquid optically clear adhesive.

In some embodiments, the VID1 lens 102 includes a first portion 116 that is within a user's viewing area and a second portion 118 that is not within a user's viewing area. The first portion 116 of the VID1 lens 102 can be constructed with a first material that has specified optical properties and the second portion 118 of the VID1 lens 102 can be constructed with a second material. The second material can be such that it does not include (or meet) the specified optical properties because it is not within the user's viewing area. In some embodiments, the first portion 116 and second portion 118 of the VID1 lens 102 have different geometries. For example, the first portion 116 of the VID1 lens 102 is thinner than the second portion 118 of the VID1 lens 102 so that the first portion 116 maintains the specified optical properties and the second portion 118 of the VID1 lens 102 is thicker to increase the structural rigidity and dampening characteristics of the VID1 lens 102. In some embodiments, the first portion 116 and the second portion 118 of the VID1 lens 102 are constructed with the same material.

In some embodiments, the optical stack and/or the display projector assembly 104 further comprise a mirror assembly that is configured to transmit information (e.g., light) from the display projector assembly 104 to the waveguide 106 via one or more mirrors.

In some embodiments, the display projector assembly 104 is suspended (or otherwise surrounded) by foam to further dampen and reduce force transmission to the waveguide 106.

In some embodiments, the monocular display assembly is comprised of two primary components: a display engine and an eyepiece. The VID1 lens and VID2 lens comprise a see-through stack. Once the display engine, eyepiece, and VID lenses are joined through an optical alignment process, the monocular display assembly is fully functional and testable as a single-eye display, independent of the smart glasses frame. In some embodiments, the VID1 lens is plano-concave and the VID2 lens is plano-convex. In some embodiments, the display projector assembly includes a liquid crystal on silicon (LCoS)-based display engine.

In some embodiments, the display projector assembly includes a projector output prism that aligns to a waveguide input prism. For improved optical performance, the waveguide may include a section that extends outward from the main waveguide body, allowing the display projector assembly to align directly to the glass of the waveguide. In some embodiments, the VID1 lens has a geometry configured to introduce as much plastic material as possible to distribute loads from drop events and reduce bending of the glass waveguide.

In some embodiments, the monocular display assembly is clamped into the frame using foam pressure-sensitive adhesive (PSA) on the polycarbonate VID lenses. During thermal events, when the glass of the waveguide expands or contracts differently than the polycarbonate of the VID lenses, the thicknesses of the VID lenses may be balanced to prevent uneven stress on the waveguide. In some embodiments, the display projector assembly is connected electrically using a flex cable with a service loop for strain relief, and thermally using grease or a low-viscosity thermal interface material. This configuration allows the display projector assembly to move inside the frame without damage during drop events.

In some embodiments, the monocular display assembly is placed into the frame using optical alignment, where fiducials on the waveguide are used to align the monocular display assembly to features in the frame. These same fiducials may be used to align the VID lenses to the waveguide and the display projector assembly to the waveguide. By using the same fiducials throughout the assembly process, tolerances are reduced in the assembly.

In some embodiments, the adhesive between the display projector assembly and the eyepiece (e.g., the optical stack) is rigid to maintain exact alignment between the display projector assembly and the waveguide. In contrast, the mounting of the monocular display assembly to the frame may use a foam PSA (e.g., a 0.4 mm thick acrylic foam PSA) to sandwich the eyepiece within the frame. This foam PSA mounting also provides water ingress protection and accommodates part thickness tolerance. In some embodiments, the frame maintains an airgap to the display projector assembly to prevent applying loads to the display projector assembly that could damage the alignment during abuse conditions.

In some embodiments, the connection to the electronics is made with a flex cable having a significant service loop, and the thermal solution uses a low-viscosity thermal interface material (TIM), graphite with a service loop, or low-density foams to prevent loads on the display projector assembly that could affect the alignment adhesive.

In some embodiments, a joint area between the display projector assembly and the waveguide is stiffened with additional material in the z-depth direction without blocking the optical path. In the x-y plane, the additional material may cover an optical keep-out zone, or may cover some of the optical keep-out zone with a liquid optically clear adhesive (LOCA) having a proper refractive index. The additional material may be a single piece, an extension of the existing eyepiece, or an extension of the display projector assembly housing. In some embodiments, the additional material is isolated from the VID lens layers, or is bonded to the VID lens layers with additional adhesives, to meet different levels of reliability requirements.

In some embodiments, the smart glasses include two monocular display assemblies, one for each eye of a user. The two monocular display assemblies may be mirror images of each other, with each monocular display assembly positioned within a respective lens area of the smart glasses frame. Each monocular display assembly includes its own display projector assembly, waveguide, VID1 lens, and VID2 lens configured to present visual information to the corresponding eye of the user. In some embodiments, each monocular display assembly includes an extended lens (e.g., VID1 lens) positioned between the display projector assembly and the waveguide to increase rigidity, increase structural support, and reduce a likelihood of the respective waveguide breaking during drop events or other impact conditions. In some embodiments, the two monocular display assemblies are in communication with each other to produce binocular images and/or videos with depth perception. The binocular configuration enables the smart glasses to present stereoscopic augmented-reality content, where slightly different images are presented to each eye to create a three-dimensional visual effect.

In some embodiments, the VID1 lens and/or VID2 lens are constructed from polycarbonate, acrylic (PMMA), cyclic olefin polymer (COP), cyclic olefin copolymer (COC), or other optical-grade polymers. The lens material may be selected based on optical clarity, impact resistance, weight, or cost considerations.

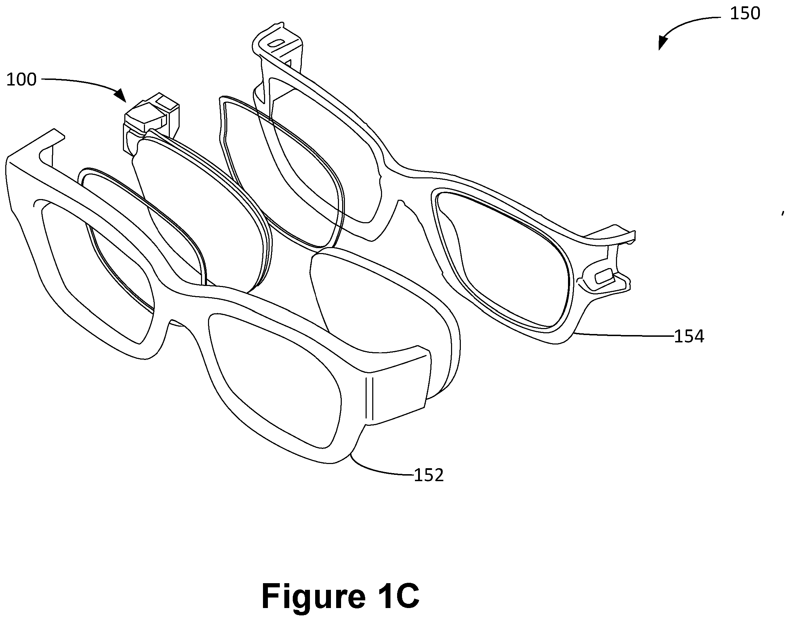

Figure 1C illustrates the pair of smart glasses 150 including the monocular display assembly, in accordance with some embodiments. As shown in Figure 1C, the monocular display assembly is coupled with other components of the smart glasses (e.g., front lens frame 152 and rear lens frame 154) to present a smart-glasses experience to a user. The monocular display assembly 100, as described with respect to Figures 1A-1B, can dampen the vibrations and forces transmitted to the waveguide. For example, during a drop event of the smart glasses 150 where the lens area impacts the ground first (e.g., front lens frame 152 and/or rear lens frame 154 impact the ground before other components of the smart glasses 150), the VID1 lens can absorb the impact to dampen the forces transmitted to the waveguide. In another example, in a different drop event where the arms impact the ground first, the VID1 lens can similarly absorb the impact to dampen or eliminate the forces transmitted to the waveguide. In this second example, the forces can be conducted via the display projector assembly (e.g., the impact occurs in the arms, and is transmitted from the arms to the display projector assembly, and then to the monocular display assembly), and the VID1 lens is configured to dampen forces and vibrations from any direction.

In some embodiments, the vibrations dampened by the VID1 lens 102 result from a drop event in which the smart glasses 150 impact a surface such as a floor, table, or other hard object. During such a drop event, the impact generates mechanical shock waves that propagate through the frame and other structural components of the smart glasses 150. These shock waves can cause the display projector assembly 104 to move or vibrate relative to the waveguide 106. Without the VID1 lens 102 positioned between the display projector assembly 104 and the waveguide 106, the mechanical energy from the impact could be transmitted directly to the waveguide 106, potentially causing the waveguide 106 to crack or shatter due to its relatively lower toughness compared to the VID1 lens 102. The VID1 lens 102, being constructed from a material with greater toughness (e.g., polycarbonate), absorbs and dissipates a portion of the mechanical energy from the drop event before the energy reaches the waveguide 106, thereby reducing the likelihood of damage to the waveguide 106.

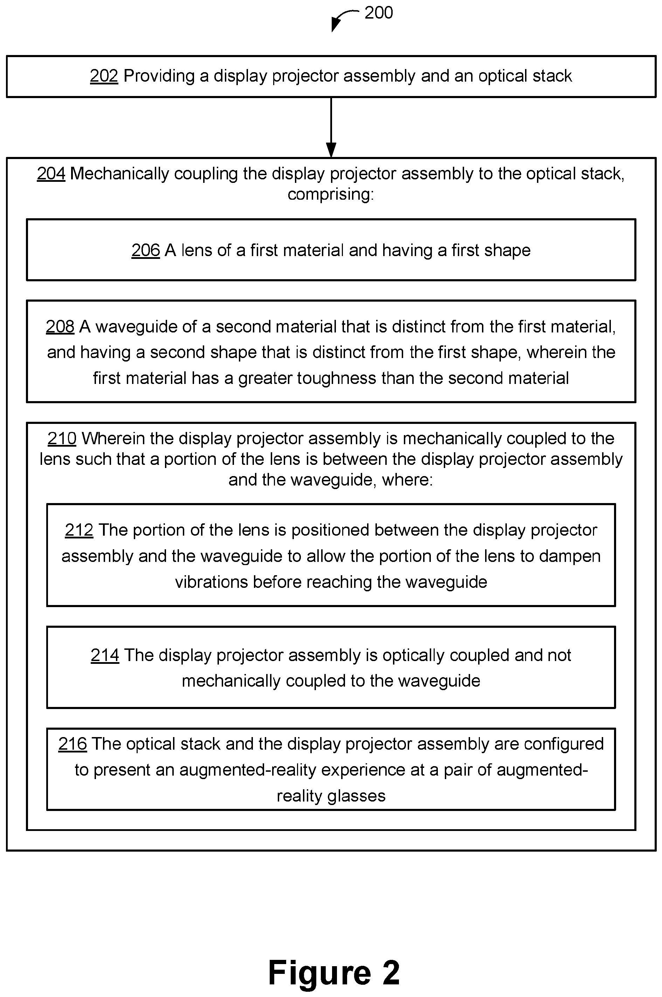

Figure 2 illustrates a flow diagram of a method of manufacturing a display assembly, in accordance with some embodiments. In some embodiments, the various operations of the methods described herein are interchangeable and/or optional, and respective operations of the methods are performed by any of the aforementioned devices, systems, or combination of devices and/or systems. For convenience, the method operations will be described below as being performed by a particular component or device, but should not be construed as limiting the performance of the operation to the particular device in all embodiments.

(A1) Figure 2 shows an example method flowchart of method 200 of manufacturing a display assembly, in accordance with some embodiments. In some embodiments, a display projector assembly and an optical stack are provided (202). The display projector assembly is mechanically coupled (204) to the optical stack, which includes at least a lens and a waveguide. The lens includes (206), and/or is constructed from, a first material, and has a first shape; the waveguide includes (208), and/or is constructed from, a second material (that is distinct from the first material, where the first material has a greater toughness than the second material), and has a second shape. The display projector assembly is mechanically coupled (210) to the lens such that a portion of the lens is between the display projector assembly and the waveguide to allow the portion of the lens to dampen (212) vibrations before reaching the waveguide. The display projector assembly is optically coupled and not mechanically coupled (214) to the waveguide. Furthermore, the optical stack and the display projector assembly are configured to present (216) a smart-glasses experience at a pair of smart glasses.

(A2) In some embodiments of A1, the optical stack is configured corresponding to any one of embodiments B2-B10.

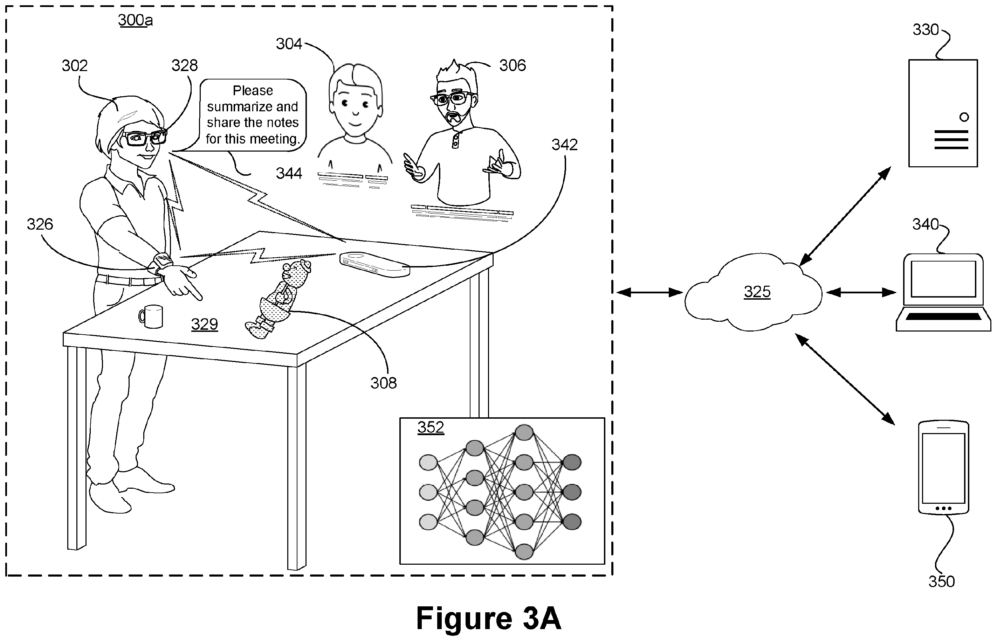

(B1) In accordance with some embodiments, a display assembly (e.g., the monocular display assembly 100 as shown in Figures 1A-1B) includes an optical stack (e.g., one or more of the VID1 lens 102, the waveguide 106, and/or the VID2 lens 110 as shown in Figures 1A-1B) and a display projector assembly (e.g., display projector assembly 104 as shown in Figures 1A-1B). The optical stack includes a lens (e.g., the VID1 lens 102 and/or the VID2 lens 110 as shown in Figures 1A-1B) of a first material having a first shape and a waveguide (e.g., the waveguide 106 as shown in Figures 1A-1B) of a second material (that is distinct from the first material) having a second shape, where the first material is distinct from, and has a greater toughness than, the second material. The display projector assembly is mechanically coupled (e.g., via the adhesive 114 as shown in Figure 1B) to the lens such that a portion of the lens (e.g., the extended portion of VID1 that is proximate to the display window 114 as shown in Figure 1B) is between the display projector assembly and the waveguide to allow the portion of the lens to dampen vibrations before reaching the waveguide, and is optically coupled and not mechanically coupled to the waveguide. The optical stack and the display projector assembly are configured to present a smart-glasses experience at a pair of smart glasses (e.g., the AR device 328 that displays the smart-glasses experiences as shown in Figures 3A-3C).

In some embodiments, the first material is distinct from the second material and has a greater toughness (e.g., can absorb more energy before failure, and/or is more impact resistant) than the second material. For example, the lens is constructed from the first material, and thus can absorb more energy before breaking than the waveguide that is constructed from the second material. In some embodiments, the first material can have a lower elastic modulus, i.e., less stiff, than the second material, which absorbs the impact forces. Having a less stiff material receive impact forces first ensures that less impact force reaches the second material which can be more sensitive to impact forces.

In some embodiments, the first material and/or the second material can include plastic (e.g., polycarbonate, acrylic, and/or other types of polymer-based materials), glass (e.g., crown glass, flint glass, tempered glass, fused silica, and/or other types of glass materials), and/or ceramics (e.g., sapphire, crystalline oxide ceramic, and/or other ceramic materials). In some embodiments, the first material and the second material can be constructed from the same class or type of materials. The first material and the second material can be constructed from different versions of the same class or type of materials. For example, the first material and the second material may both be constructed from plastic, where the first material is constructed from polycarbonate and the second material is constructed from acrylic, and where the polycarbonate has a greater toughness than acrylic. In another example, the first material and the second material are both polycarbonate plastic, where the first material is a formulation of polycarbonate plastic that has a greater toughness than a second formulation of polycarbonate plastic.

In some embodiments, the lens and/or the waveguide include a bumper that has a greater toughness than the material of the lens and/or the waveguide. An example of a bumper includes a material that is partially or completely along a thin perimeter of the lens and/or the waveguide (e.g., proximate to where a frame of a pair of glasses would interface with the lens, waveguide, and/or optical stack).

In some embodiments, the portion of the lens reduces vibrations by 1%, 5%, 10%, 50%, or any other amount of vibration (or force) reduction when compared to a configuration without the portion of the lens dampening vibrations. For example, the portion of the lens reduces the force to the waveguide by a specified amount (e.g., 1%, 5%, 10%, etc.) during a drop event (e.g., a user drops the smart glasses to the ground). The force may be transmitted from the frame of the smart glasses, the display projector assembly, and/or another component of the smart glasses.

(B2) In some embodiments of B1, the lens includes a cutout such that light information is transmitted from the display projector assembly toward the waveguide without passing through the lens.

(B3) In some embodiments of any one of B1-B2, the waveguide is coupled with an optical pathway (e.g., the display window 112 as shown in Figures 1A-1B) that receives light information from the display projector assembly to cause presentation of smart-glasses objects to a wearer of the pair of smart glasses. The cutout of the lens is along a path of the light information.

(B4) In some embodiments of any one of B1-B3, the cutout of the lens extends beyond a perimeter of the optical pathway to reduce (or eliminate) introduction of artifacts to the light information. These light artifacts can be introduced by the lens (or other optical components) positioned too close to the optical pathway (e.g., creates interference, or otherwise interacts with the light that is traversing through the optical pathway). In some embodiments, the introduction of artifacts may be limited to a portion of the image (e.g., only at the edges, center, or some other predefined area of the image). For example, the cutout of the lens may reduce the introduction of the artifacts so that less than 5% (or some other predefined amount) of the light and/or image is impacted by the artifacts.

(B5) In some embodiments of any one of B1-B4, the cutout of the lens is coextensive with a perimeter of the optical pathway.

(B6) In some embodiments of any one of B1-B5, the lens includes a first portion and a second portion of the lens. The first portion of the lens has first material properties and is configured to display the smart-glasses experience. The second portion of the lens has second material properties (that are distinct from the first material properties) and is configured to dampen the vibrations before reaching the waveguide.

(B7) In some embodiments of any of B1-B6, an optical pathway between the display projector assembly and the waveguide includes an airgap that separates the display projector assembly from the waveguide, and the display projector assembly is mechanically coupled to the lens without the airgap.

(B8) In some embodiments of any one of B1-B7, the optical stack further comprises a mirror assembly configured to transmit optical information from the display projector assembly to the waveguide via one or more mirrors.

(B9) In some embodiments of any of B1-B8, the optical stack and the display projector assembly are coupled via a liquid optically clear adhesive (LOCA) between the lens and the display projector assembly.

(B10) In some embodiments of any one of B1-B9, the lens adjusts an image, associated with the smart-glasses experience, from the waveguide so that the smart-glasses experience displayed via the waveguide appears a specified distance from a user.

(C1) In accordance with some embodiments, a pair of smart glasses includes a frame of the smart glasses, an optical stack that is coupled to the frame, and a display projector assembly that is also coupled to the frame. The optical stack includes a lens of a first material and having a first shape, and a waveguide of a second material and having a second shape, where the first material has a greater toughness than the second material. The display projector assembly is further coupled to the lens such that a portion of the lens is between the display projector assembly and the waveguide to allow the portion of the lens to dampen vibrations before reaching the waveguide. The optical stack and the display projector assembly are configured to present a smart-glasses experience at the smart glasses.

(C2) In some embodiments of C1, the optical stack is configured corresponding to any one of embodiments B2-B10.

(D1) In accordance with some embodiments, a method of presenting a smart-glasses experience includes utilizing the display assembly corresponding to any of B1-B10.

(E1) In accordance with some embodiments, a display assembly includes a display projector assembly includes a display projector assembly (e.g., display projector assembly 104 as shown in Figures 1A-1B) configured to provide visual information to a waveguide (e.g., waveguide 106 as shown in Figures 1A-1B) along a projection axis of the display projector assembly aligned with a display window of the waveguide (e.g., display window 112 as shown in Figures 1A-1B). The display assembly includes a lens (e.g., VID1 lens 102 as shown in Figures 1A-1B) coupled to the display projector assembly, where the lens is configured to dampen vibrations from the display projector assembly to the waveguide. The lens has a first material having a first shape with a first toughness, and the first shape of the lens exposes the display window of the waveguide to the display projector assembly. The waveguide is coupled to the lens and comprises a second material having a second shape with a second toughness, where the waveguide is configured to output the visual information. A gap (e.g., an airgap) separates the display projector assembly from the waveguide along the projection axis.

(E2) In some embodiments of E1, the first shape of the lens includes a cutout along the projection axis, such that light is transmitted from the display projector assembly to the waveguide without passing through the lens (e.g., as shown in Figures 1A-1B where the VID1 lens 102 includes a cutout proximate to the display window 112).

(E3) In some embodiments of any of E1-E2, the cutout of the lens extends beyond a perimeter of the display window to reduce introduction of artifacts to the light information.

(E4) In some embodiments of any of E1-E3, the cutout extends through the lens and at least a portion of the lens surrounds a perimeter of the cutout.

(E5) In some embodiments of any one of E1-E4, the lens includes a first portion of the lens (e.g., first portion 116 as shown in Figures 1A-1B) configured to pass visual information output by the waveguide, and a second portion of the lens (e.g., second portion 118 as shown in Figures 1A-1B) configured to dampen the vibrations to the waveguide, wherein the first portion of the lens has first material properties, and the second portion of the lens has second material properties distinct from the first material properties.

(E6) In some embodiments of any of E1-E5, the first portion of the lens has a first thickness, and the second portion of the lens has a second thickness that is greater than the first thickness.

(E7) In some embodiments of any one of E1-E6, the display assembly further comprises a mirror assembly configured to transmit optical information from the display projector assembly to the waveguide via one or more mirrors.

(E8) In some embodiments of any one of E1-E7, the lens and the display projector assembly are coupled via a liquid optically clear adhesive (e.g., adhesive 114 as shown in Figure 1B).

(E9) In some embodiments of any one of E1-E8, the lens adjusts an image from the waveguide so that the visual information presented via the waveguide appears a specified distance from a user.

(F1) In accordance with some embodiments, a pair of smart glasses (e.g., a pair of smart glasses 150 as shown in Figure 1C) includes a frame (e.g., front lens frame 152 and/or rear lens frame 154 as shown in Figure 1C), a display projector assembly (e.g., display projector assembly 104 as shown in Figures 1A-1B) coupled to the frame and configured to provide visual information to a waveguide (e.g., waveguide 106 as shown in Figures 1A-1B) along a projection axis of the display projector assembly aligned with a display window of the waveguide (e.g., display window 112 as shown in Figures 1A-1B), a lens (e.g., VID1 lens 102 as shown in Figures 1A-1B) coupled to the frame and the display projector assembly, and the waveguide coupled to the lens and the frame. The lens is configured to dampen vibrations from the display projector assembly to the waveguide. The lens has a first material having a first shape with a first toughness, and the first shape of the lens exposes the display window of the waveguide to the display projector assembly. The waveguide comprises a second material having a second shape with a second toughness, where the waveguide is configured to output the visual information. A gap (e.g., an airgap) separates the display projector assembly from the waveguide along the projection axis.

(F2) In some embodiments of F1, the first shape of the lens includes a cutout along the projection axis, such that light is transmitted from the display projector assembly to the waveguide without passing through the lens (e.g., as shown in Figures 1A-1B where the VID1 lens 102 includes a cutout proximate to the display window 112).

(F3) In some embodiments of any of F1-F2, the cutout of the lens extends beyond a perimeter of the display window to reduce introduction of artifacts to the light information.

(F4) In some embodiments of any of F1-F3, the cutout extends through the lens and at least a portion of the lens surrounds a perimeter of the cutout.

(F5) In some embodiments of any one of F1-F4, the lens includes a first portion of the lens (e.g., first portion 116 as shown in Figures 1A-1B) configured to pass visual information output by the waveguide, and a second portion of the lens (e.g., second portion 118 as shown in Figures 1A-1B) configured to dampen the vibrations to the waveguide, wherein the first portion of the lens has first material properties, and the second portion of the lens has second material properties distinct from the first material properties.

(F6) In some embodiments of any of F1-F5, the first portion of the lens has a first thickness, and the second portion of the lens has a second thickness that is greater than the first thickness.

(F7) In some embodiments of any one of F1-F6, the pair of smart glasses further comprises a mirror assembly configured to transmit optical information from the display projector assembly to the waveguide via one or more mirrors.

(F8) In some embodiments of any one of F1-F7, the lens and the display projector assembly are coupled via a liquid optically clear adhesive (e.g., adhesive 114 as shown in Figure 1B).

(F9) In some embodiments of any one of F1-F8, the lens adjusts an image from the waveguide so that the visual information presented via the waveguide appears a specified distance from a wearer of the smart glasses.

(G1) In accordance with some embodiments, a method of presenting visual information via a pair of smart glasses (e.g., a pair of smart glasses 150 as shown in Figure 1C) includes projecting, by a display projector assembly (e.g., display projector assembly 104 as shown in Figures 1A-1B), visual information to a waveguide (e.g., waveguide 106 as shown in Figures 1A-1B) along a projection axis aligned with a display window of the waveguide (e.g., display window 112 as shown in Figures 1A-1B), wherein the visual information is projected across a gap (e.g., an airgap) separating the display projector assembly from the waveguide along the projection axis. The method includes presenting, via the visual information projected from the display projector assembly to the waveguide, a smart-glasses experience. The method includes dampening, via a lens (e.g., VID1 lens 102 as shown in Figures 1A-1B), vibrations from the display projector assembly to the waveguide, wherein the waveguide is coupled to the lens, the lens comprises a first material having a first shape with a first toughness, the first shape of the lens exposes the display window of the waveguide to the display projector assembly, the waveguide comprises a second material having a second shape with a second toughness, and the first material has a greater toughness than the second material.

(G2) In some embodiments of G1, the first shape of the lens includes a cutout along the projection axis (e.g., as shown in Figures 1A-1B where the VID1 lens 102 includes a cutout proximate to the display window 112), such that the visual information is transmitted from the display projector assembly to the waveguide without passing through the lens. The lens includes a first portion (e.g., first portion 116 as shown in Figures 1A-1B) configured to pass the visual information output by the waveguide and a second portion (e.g., second portion 118 as shown in Figures 1A-1B) configured to dampen the vibrations to the waveguide. The first portion of the lens has a first thickness, and the second portion of the lens has a second thickness that is greater than the first thickness.

(G3) In some embodiments of G2, the cutout of the lens extends beyond a perimeter of the display window to reduce introduction of artifacts to the light information.

(G4) In some embodiments of any of G2-G3, the cutout extends through the lens and at least a portion of the lens surrounds a perimeter of the cutout.

(G5) In some embodiments of any one of G1-G4, the first portion of the lens has first material properties, and the second portion of the lens has second material properties distinct from the first material properties.

(G6) In some embodiments of any one of G1-G5, the method further comprises transmitting, via a mirror assembly, optical information from the display projector assembly to the waveguide via one or more mirrors.

(G7) In some embodiments of any one of G1-G6, the lens and the display projector assembly are coupled via a liquid optically clear adhesive (e.g., adhesive 114 as shown in Figure 1B).

(G8) In some embodiments of any one of G1-G7, the method further comprises adjusting, via the lens, an image from the waveguide so that the visual information presented via the waveguide appears a specified distance from a wearer of the smart glasses.

### Example Extended-Reality Systems

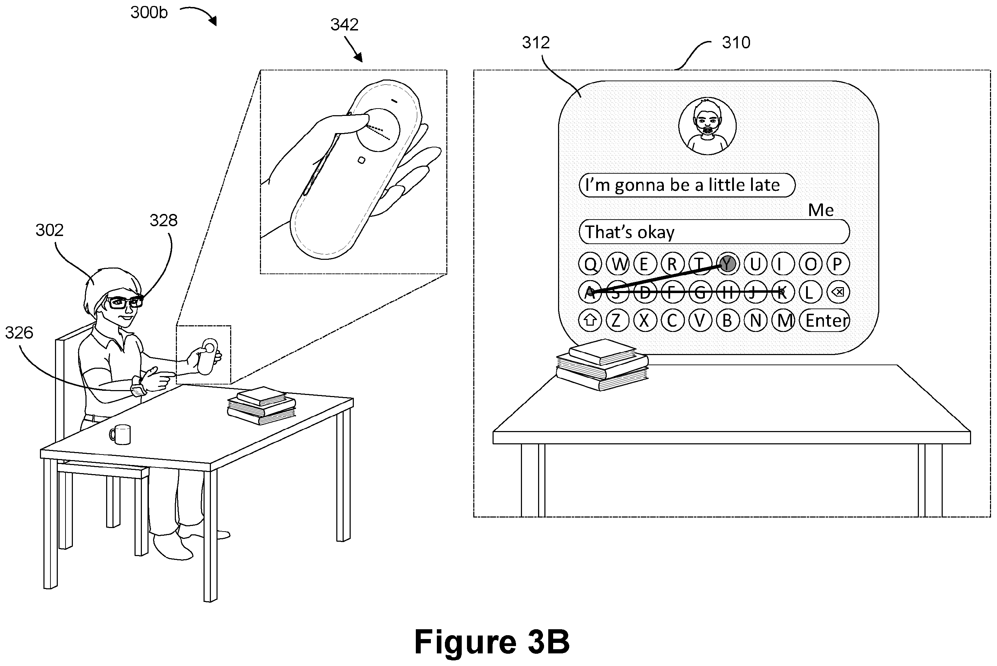

Figures 3A, 3B, 3C-1, and 3C-2 illustrate example XR systems that include AR and MR systems, in accordance with some embodiments. Figure 3A shows a first XR system 300a and first example user interactions using a wrist-wearable device 326, a head-wearable device (e.g., AR device 328), and/or an HIPD 342. Figure 3B shows a second XR system 300b and second example user interactions using a wrist-wearable device 326, an AR device 328, and/or an HIPD 342. Figures 3C-1 and 3C-2 show a third MR system 300c and third example user interactions using a wrist-wearable device 326, a head-wearable device (e.g., an MR device such as a VR device), and/or an HIPD 342. As the skilled artisan will appreciate upon reading the descriptions provided herein, the above-example AR and MR systems (described in detail below) can perform various functions and/or operations.

The wrist-wearable device 326, the head-wearable devices, and/or the HIPD 342 can communicatively couple via a network 325 (e.g., cellular, near field, Wi-Fi, personal area network, wireless LAN). Additionally, the wrist-wearable device 326, the head-wearable device, and/or the HIPD 342 can also communicatively couple with one or more servers 330, computers 340 (e.g., laptops, computers), mobile devices 350 (e.g., smartphones, tablets), and/or other electronic devices via the network 325 (e.g., cellular, near field, Wi-Fi, personal area network, wireless LAN). Similarly, a smart textile-based garment, when used, can also communicatively couple with the wrist-wearable device 326, the head-wearable device(s), the HIPD 342, the one or more servers 330, the computers 340, the mobile devices 350, and/or other electronic devices via the network 325 to provide inputs.

Turning to Figure 3A, a user 302 is shown wearing the wrist-wearable device 326 and the AR device 328 and having the HIPD 342 on their desk. The wrist-wearable device 326, the AR device 328, and the HIPD 342 facilitate user interaction with an AR environment. In particular, as shown by the first AR system 300a, the wrist-wearable device 326, the AR device 328, and/or the HIPD 342 cause presentation of one or more avatars 304, digital representations of contacts 306, and virtual objects 308. As discussed below, the user 302 can interact with the one or more avatars 304, digital representations of the contacts 306, and virtual objects 308 via the wrist-wearable device 326, the AR device 328, and/or the HIPD 342. In addition, the user 302 is also able to directly view physical objects in the environment, such as a physical table 329, through transparent lens(es) and waveguide(s) of the AR device 328. Alternatively, an MR device could be used in place of the AR device 328 and a similar user experience can take place, but the user would not be directly viewing physical objects in the environment, such as the table 329, and would instead be presented with a virtual reconstruction of the table 329 produced from one or more sensors of the MR device (e.g., an outward-facing camera capable of recording the surrounding environment).

The user 302 can use any of the wrist-wearable device 326, the AR device 328 (e.g., through physical inputs at the AR device and/or built-in motion tracking of a user's extremities), a smart-textile garment, an externally mounted extremity tracking device, the HIPD 342 to provide user inputs, etc. For example, the user 302 can perform one or more hand gestures that are detected by the wrist-wearable device 326 (e.g., using one or more EMG sensors and/or IMUs built into the wrist-wearable device) and/or the AR device 328 (e.g., using one or more image sensors or cameras) to provide a user input. Alternatively, or additionally, the user 302 can provide a user input via one or more touch surfaces of the wrist-wearable device 326, the AR device 328, and/or the HIPD 342, and/or voice commands captured by a microphone of the wrist-wearable device 326, the AR device 328, and/or the HIPD 342. The wrist-wearable device 326, the AR device 328, and/or the HIPD 342 include an artificially intelligent digital assistant to help the user in providing a user input (e.g., completing a sequence of operations, suggesting different operations or commands, providing reminders, confirming a command). For example, the digital assistant can be invoked through an input occurring at the AR device 328 (e.g., via an input at a temple arm of the AR device 328). In some embodiments, the user 302 can provide a user input via one or more facial gestures and/or facial expressions. For example, cameras of the wrist-wearable device 326, the AR device 328, and/or the HIPD 342 can track the user 302's eyes for navigating a user interface.

The wrist-wearable device 326, the AR device 328, and/or the HIPD 342 can operate alone or in conjunction to allow the user 302 to interact with the AR environment. In some embodiments, the HIPD 342 is configured to operate as a central hub or control center for the wrist-wearable device 326, the AR device 328, and/or another communicatively coupled device. For example, the user 302 can provide an input to interact with the AR environment at any of the wrist-wearable device 326, the AR device 328, and/or the HIPD 342, and the HIPD 342 can identify one or more back-end and front-end tasks to cause the performance of the requested interaction and distribute instructions to cause the performance of the one or more back-end and front-end tasks at the wrist-wearable device 326, the AR device 328, and/or the HIPD 342. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 342 can perform the back-end tasks and provide the wrist-wearable device 326 and/or the AR device 328 operational data corresponding to the performed back-end tasks such that the wrist-wearable device 326 and/or the AR device 328 can perform the front-end tasks. In this way, the HIPD 342, which has more computational resources and greater thermal headroom than the wrist-wearable device 326 and/or the AR device 328, performs computationally intensive tasks and reduces the computer resource utilization and/or power usage of the wrist-wearable device 326 and/or the AR device 328.

In the example shown by the first AR system 300a, the HIPD 342 identifies one or more back-end tasks and front-end tasks associated with a user request to initiate an AR video call with one or more other users (represented by the avatar 304 and the digital representation of the contact 306) and distributes instructions to cause the performance of the one or more back-end tasks and front-end tasks. In particular, the HIPD 342 performs back-end tasks for processing and/or rendering image data (and other data) associated with the AR video call and provides operational data associated with the performed back-end tasks to the AR device 328 such that the AR device 328 performs front-end tasks for presenting the AR video call (e.g., presenting the avatar 304 and the digital representation of the contact 306).

In some embodiments, the HIPD 342 can operate as a focal or anchor point for causing the presentation of information. This allows the user 302 to be generally aware of where information is presented. For example, as shown in the first AR system 300a, the avatar 304 and the digital representation of the contact 306 are presented above the HIPD 342. In particular, the HIPD 342 and the AR device 328 operate in conjunction to determine a location for presenting the avatar 304 and the digital representation of the contact 306. In some embodiments, information can be presented within a predetermined distance from the HIPD 342 (e.g., within five meters). For example, as shown in the first AR system 300a, virtual object 308 is presented on the desk some distance from the HIPD 342. Similar to the above example, the HIPD 342 and the AR device 328 can operate in conjunction to determine a location for presenting the virtual object 308. Alternatively, in some embodiments, presentation of information is not bound by the HIPD 342. More specifically, the avatar 304, the digital representation of the contact 306, and the virtual object 308 do not have to be presented within a predetermined distance of the HIPD 342. While an AR device 328 is described working with an HIPD, an MR headset can be interacted with in the same way as the AR device 328.

User inputs provided at the wrist-wearable device 326, the AR device 328, and/or the HIPD 342 are coordinated such that the user can use any device to initiate, continue, and/or complete an operation. For example, the user 302 can provide a user input to the AR device 328 to cause the AR device 328 to present the virtual object 308 and, while the virtual object 308 is presented by the AR device 328, the user 302 can provide one or more hand gestures via the wrist-wearable device 326 to interact and/or manipulate the virtual object 308. While an AR device 328 is described working with a wrist-wearable device 326, an MR headset can be interacted with in the same way as the AR device 328.

### Integration of Artificial Intelligence with XR Systems

Figure 3A illustrates an interaction in which an artificially intelligent virtual assistant can assist in requests made by a user 302. The Al virtual assistant can be used to complete open-ended requests made through natural language inputs by a user 302. For example, in Figure 3A the user 302 makes an audible request 344 to summarize the conversation and then share the summarized conversation with others in the meeting. In addition, the Al virtual assistant is configured to use sensors of the XR system (e.g., cameras of an XR headset, microphones, and various other sensors of any of the devices in the system) to provide contextual prompts to the user for initiating tasks.

Figure 3A also illustrates an example neural network 352 used in Artificial Intelligence applications. Uses of Artificial Intelligence (AI) are varied and encompass many different aspects of the devices and systems described herein. AI capabilities cover a diverse range of applications and deepen interactions between the user 302 and user devices (e.g., the AR device 328, an MR device 332, the HIPD 342, the wrist-wearable device 326). The Al discussed herein can be derived using many different training techniques. While the primary Al model example discussed herein is a neural network, other Al models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The Al models can be implemented at one or more of the user devices, and/or any other devices described herein. For devices and systems herein that employ multiple Al models, different models can be used depending on the task. For example, for a natural-language artificially intelligent virtual assistant, an LLM can be used and for the object detection of a physical environment, a DNN can be used instead.

In another example, an Al virtual assistant can include many different Al models and based on the user's request, multiple Al models may be employed (concurrently, sequentially or a combination thereof). For example, an LLM-based Al model can provide instructions for helping a user follow a recipe and the instructions can be based in part on another Al model that is derived from an ANN, a DNN, an RNN, etc., that is capable of discerning what part of the recipe the user is on (e.g., object and scene detection).

As Al training models evolve, the operations and experiences described herein could potentially be performed with different models other than those listed above, and a person skilled in the art would understand that the list above is non-limiting.

A user 302 can interact with an Al model through natural language inputs captured by a voice sensor, text inputs, or any other input modality that accepts natural language and/or a corresponding voice sensor module. In another instance, input is provided by tracking the eye gaze of a user 302 via a gaze tracker module. Additionally, the Al model can also receive inputs beyond those supplied by a user 302. For example, the Al model can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 328) or from multiple devices that are in communication with each other (e.g., a system that includes at least two of an AR device 328, an MR device 332, the HIPD 342, the wrist-wearable device 326, etc.). The AI model can also access additional information (e.g., one or more servers 330, the computers 340, the mobile devices 350, and/or other electronic devices) via a network 325.

A non-limiting list of Al-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, Al-enhanced functions are fully or partially executed on cloud-computing platforms communicatively coupled to the user devices (e.g., the AR device 328, an MR device 332, the HIPD 342, the wrist-wearable device 326) via the one or more networks. The cloud-computing platforms provide scalable computing resources, distributed computing, managed Al services, interference acceleration, pre-trained models, APIs and/or other resources to support comprehensive computations required by the Al-enhanced function.

Example outputs stemming from the use of an Al model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 328, an MR device 332, the HIPD 342, the wrist-wearable device 326), storage options of the external devices (servers, computers, mobile devices, etc.), and/or storage options of the cloud-computing platforms.

The Al-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 342), haptic feedback can provide information to the user 302. An Al model can also use the inputs described above to determine the appropriate modality and device(s) to present content to the user (e.g., a user walking on a busy road can be presented with an audio output instead of a visual output to avoid distracting the user 302).

### Example Augmented-Reality Interaction

Figure 3B shows the user 302 wearing the wrist-wearable device 326 and the AR device 328 and holding the HIPD 342. In the second AR system 300b, the wrist-wearable device 326, the AR device 328, and/or the HIPD 342 are used to receive and/or provide one or more messages to a contact of the user 302. In particular, the wrist-wearable device 326, the AR device 328, and/or the HIPD 342 detect and coordinate one or more user inputs to initiate a messaging application and prepare a response to a received message via the messaging application.

In some embodiments, the user 302 initiates, via a user input, an application on the wrist-wearable device 326, the AR device 328, and/or the HIPD 342 that causes the application to initiate on at least one device. For example, in the second AR system 300b the user 302 performs a hand gesture associated with a command for initiating a messaging application (represented by messaging user interface 312); the wrist-wearable device 326 detects the hand gesture; and, based on a determination that the user 302 is wearing the AR device 328, causes the AR device 328 to present a messaging user interface 312 of the messaging application. The AR device 328 can present the messaging user interface 312 to the user 302 via its display (e.g., as shown by user 302's field of view 310). In some embodiments, the application is initiated and can be run on the device (e.g., the wrist-wearable device 326, the AR device 328, and/or the HIPD 342) that detects the user input to initiate the application, and the device provides another device operational data to cause the presentation of the messaging application. For example, the wrist-wearable device 326 can detect the user input to initiate a messaging application, initiate and run the messaging application, and provide operational data to the AR device 328 and/or the HIPD 342 to cause presentation of the messaging application. Alternatively, the application can be initiated and run at a device other than the device that detected the user input. For example, the wrist-wearable device 326 can detect the hand gesture associated with initiating the messaging application and cause the HIPD 342 to run the messaging application and coordinate the presentation of the messaging application.

Further, the user 302 can provide a user input provided at the wrist-wearable device 326, the AR device 328, and/or the HIPD 342 to continue and/or complete an operation initiated at another device. For example, after initiating the messaging application via the wrist-wearable device 326 and while the AR device 328 presents the messaging user interface 312, the user 302 can provide an input at the HIPD 342 to prepare a response (e.g., shown by the swipe gesture performed on the HIPD 342). The user 302's gestures performed on the HIPD 342 can be provided and/or displayed on another device. For example, the user 302's swipe gestures performed on the HIPD 342 are displayed on a virtual keyboard of the messaging user interface 312 displayed by the AR device 328.

In some embodiments, the wrist-wearable device 326, the AR device 328, the HIPD 342, and/or other communicatively coupled devices can present one or more notifications to the user 302. The notification can be an indication of a new message, an incoming call, an application update, a status update, etc. The user 302 can select the notification via the wrist-wearable device 326, the AR device 328, or the HIPD 342 and cause presentation of an application or operation associated with the notification on at least one device. For example, the user 302 can receive a notification that a message was received at the wrist-wearable device 326, the AR device 328, the HIPD 342, and/or other communicatively coupled device and provide a user input at the wrist-wearable device 326, the AR device 328, and/or the HIPD 342 to review the notification, and the device detecting the user input can cause an application associated with the notification to be initiated and/or presented at the wrist-wearable device 326, the AR device 328, and/or the HIPD 342.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 328 can present to the user 302 game application data and the HIPD 342 can use a controller to provide inputs to the game. Similarly, the user 302 can use the wrist-wearable device 326 to initiate a camera of the AR device 328, and the user can use the wrist-wearable device 326, the AR device 328, and/or the HIPD 342 to manipulate the image capture (e.g., zoom in or out, apply filters) and capture image data.

While an AR device 328 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light-emitting diodes (LEDs) configured to provide a user with information, e.g., an LED around the right-side lens can illuminate to notify the wearer to turn right while directions are being provided, or an LED on the left-side lens can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed to presenting an AR augmented at both lenses to produce a binocular image). In some instances, an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed-Reality Interaction

Turning to Figures 3C-1 and 3C-2, the user 302 is shown wearing the wrist-wearable device 326 and an MR device 332 (e.g., a device capable of providing either an entirely VR experience or an MR experience that displays object(s) from a physical environment at a display of the device) and holding the HIPD 342. In the third AR system 300c, the wrist-wearable device 326, the MR device 332, and/or the HIPD 342 are used to interact within an MR environment, such as a VR game or other MR/VR application. While the MR device 332 presents a representation of a VR game (e.g., first MR game environment 320) to the user 302, the wrist-wearable device 326, the MR device 332, and/or the HIPD 342 detect and coordinate one or more user inputs to allow the user 302 to interact with the VR game.

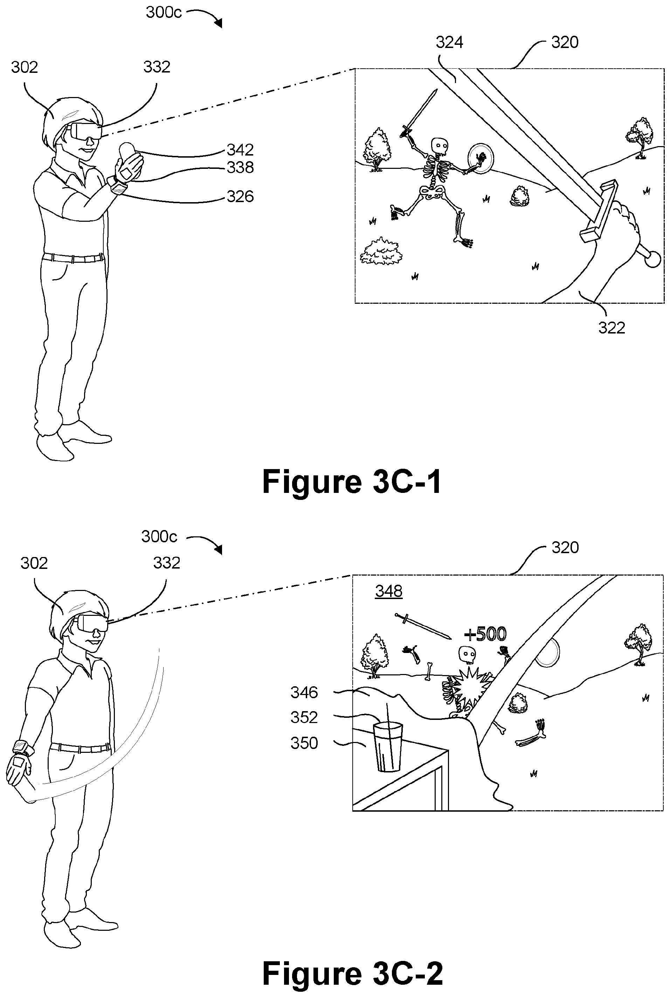

In some embodiments, the user 302 can provide a user input via the wrist-wearable device 326, the MR device 332, and/or the HIPD 342 that causes an action in a corresponding MR environment. For example, the user 302 in the third MR system 300c (shown in Figure 3C-1) raises the HIPD 342 to prepare for a swing in the first MR game environment 320. The MR device 332, responsive to the user 302 raising the HIPD 342, causes the MR representation of the user 322 to perform a similar action (e.g., raise a virtual object, such as a virtual sword 324). In some embodiments, each device uses respective sensor data and/or image data to detect the user input and provide an accurate representation of the user 302's motion. For example, image sensors (e.g., SLAM cameras or other cameras) of the HIPD 342 can be used to detect a position of the HIPD 342 relative to the user 302's body such that the virtual object can be positioned appropriately within the first MR game environment 320; sensor data from the wrist-wearable device 326 can be used to detect a velocity at which the user 302 raises the HIPD 342 such that the MR representation of the user 322 and the virtual sword 324 are synchronized with the user 302's movements; and image sensors of the MR device 332 can be used to represent the user 302's body, boundary conditions, or real-world objects within the first MR game environment 320.

In Figure 3C-2, the user 302 performs a downward swing while holding the HIPD 342. The user 302's downward swing is detected by the wrist-wearable device 326, the MR device 332, and/or the HIPD 342, and a corresponding action is performed in the first MR game environment 320. In some embodiments, the data captured by each device is used to improve the user's experience within the MR environment. For example, sensor data of the wrist-wearable device 326 can be used to determine a speed and/or force at which the downward swing is performed, and image sensors of the HIPD 342 and/or the MR device 332 can be used to determine a location of the swing and how it should be represented in the first MR game environment 320, which, in turn, can be used as inputs for the MR environment (e.g., game mechanics, which can use detected speed, force, locations, and/or aspects of the user 302's actions to classify a user's inputs (e.g., user performs a light strike, hard strike, critical strike, glancing strike, miss) or calculate an output (e.g., amount of damage)).

Figure 3C-2 further illustrates that a portion of the physical environment is reconstructed and displayed at a display of the MR device 332 while the MR game environment 320 is being displayed. In this instance, a reconstruction of the physical environment 346 is displayed in place of a portion of the MR game environment 320 when object(s) in the physical environment are potentially in the path of the user (e.g., a collision with the user and an object in the physical environment are likely). Thus, this example MR game environment 320 includes (i) an immersive VR portion 348 (e.g., an environment that does not have a corollary counterpart in a nearby physical environment) and (ii) a reconstruction of the physical environment 346 (e.g., table 350 and cup 352). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 326, the MR device 332, and/or the HIPD 342 are described as detecting user inputs, in some embodiments, user inputs are detected at a single device (with the single device being responsible for distributing signals to the other devices for performing the user input). For example, the HIPD 342 can operate an application for generating the first MR game environment 320 and provide the MR device 332 with corresponding data for causing the presentation of the first MR game environment 320, as well as detect the user 302's movements (while holding the HIPD 342) to cause the performance of corresponding actions within the first MR game environment 320. Additionally or alternatively, in some embodiments, operational data (e.g., sensor data, image data, application data, device data, and/or other data) of one or more devices is provided to a single device (e.g., the HIPD 342) to process the operational data and cause respective devices to perform an action associated with processed operational data.

In some embodiments, the user 302 can wear a wrist-wearable device 326, wear an MR device 332, wear smart textile-based garments 338 (e.g., wearable haptic gloves), and/or hold an HIPD 342 device. In this embodiment, the wrist-wearable device 326, the MR device 332, and/or the smart textile-based garments 338 are used to interact within an MR environment (e.g., any AR or MR system described above in reference to Figures 3A-3B). While the MR device 332 presents a representation of an MR game (e.g., second MR game environment 320) to the user 302, the wrist-wearable device 326, the MR device 332, and/or the smart textile-based garments 338 detect and coordinate one or more user inputs to allow the user 302 to interact with the MR environment.

In some embodiments, the user 302 can provide a user input via the wrist-wearable device 326, an HIPD 342, the MR device 332, and/or the smart textile-based garments 338 that causes an action in a corresponding MR environment. In some embodiments, each device uses respective sensor data and/or image data to detect the user input and provide an accurate representation of the user 302's motion. While four different input devices are shown (e.g., a wrist-wearable device 326, an MR device 332, an HIPD 342, and a smart textile-based garment 338), each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 338), sensor fusion can be utilized to ensure that inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 338 can be used in conjunction with an MR device and/or an HIPD 342.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments, example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices, and facilitates communication, and/or data processing and/or data transfer, between the respective electronic devices and/or electronic components.

The foregoing descriptions of Figures 3A-3C-2 provided above are intended to augment the description provided in reference to Figures 1A-1B. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc., may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting" that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings, within the scope of the appended claims. The embodiments were chosen and described in order to best explain principles of operation and practical applications, to thereby enable others skilled in the art.

## Claims

1. A display assembly, comprising:
a display projector assembly configured to provide visual information to a waveguide along a projection axis of the display projector assembly aligned with a display window of the waveguide;
a lens coupled to the display projector assembly, wherein:
the lens is configured to dampen vibrations from the display projector assembly to the waveguide,
the lens has a first material having a first shape with a first toughness; and
the first shape of the lens exposes the display window of the waveguide to the display projector assembly;
the waveguide coupled to the lens, the waveguide comprising a second material having a second shape with a second toughness, wherein:
the first toughness is greater than the second toughness; and
the waveguide is configured to output the visual information; and
a gap separating the display projector assembly from the waveguide along the projection axis.

2. The display assembly of claim 1, wherein the first shape comprises a cutout along the projection axis, such that the visual information is transmitted from the display projector assembly to the waveguide without passing through the lens;
optionally, wherein the cutout extends beyond a perimeter of the display window to reduce introduction of artifacts to the visual information;
optionally, wherein the cutout extends through the lens and at least a portion of the lens surrounds a perimeter of the cutout.

3. The display assembly of claim 1 or claim 2, wherein the lens comprises:
a first portion of the lens configured to pass visual information output by the waveguide; and
a second portion of the lens configured to dampen the vibrations to the waveguide, wherein the first portion of the lens has first material properties, and the second portion of the lens has second material properties distinct from the first material properties.

4. The display assembly of claim 3, wherein the first portion of the lens has a first thickness, and the second portion of the lens has a second thickness that is greater than the first thickness.

5. The display assembly of any preceding claim, further comprising a mirror assembly configured to transmit optical information from the display projector assembly to the waveguide via one or more mirrors.

6. The display assembly of any preceding claim, wherein the lens and the display projector assembly are coupled via a liquid optically clear adhesive.

7. The display assembly of any preceding claim, wherein the lens adjusts an image from the waveguide so that the visual information presented via the waveguide appears a specified distance from a user.

8. A pair of smart glasses, comprising:
a frame;
a display projector assembly coupled to the frame and configured to provide visual information to a waveguide along a projection axis of the display projector assembly aligned with a display window of the waveguide;
a lens coupled to the frame and the display projector assembly, wherein:
the lens is configured to dampen vibrations from the display projector assembly to the waveguide,
the lens has a first material having a first shape with a first toughness, and
the first shape of the lens exposes the display window of the waveguide to the display projector assembly;
the waveguide coupled to the lens and the frame, the waveguide comprising a second material having a second shape with a second toughness, wherein:
the first toughness is greater than the second toughness; and
the waveguide is configured to output the visual information; and
a gap separating the display projector assembly from the waveguide along the projection axis.

9. The pair of smart glasses of claim 8, wherein the first shape comprises a cutout along the projection axis, such that light is transmitted from the display projector assembly to the waveguide without passing through the lens;
optionally, wherein the cutout extends beyond a perimeter of the display window to reduce introduction of artifacts to the visual information;
optionally, wherein the cutout extends through the lens and at least a portion of the lens surrounds a perimeter of the cutout.

10. The pair of smart glasses of claim 8 or claim 9, wherein the lens comprises:
a first portion of the lens configured to pass visual information output by the waveguide; and
a second portion of the lens configured to dampen the vibrations to the waveguide, wherein the first portion of the lens has first material properties, and the second portion of the lens has second material properties distinct from the first material properties;
optionally, wherein the first portion of the lens has a first thickness, and the second portion of the lens has a second thickness that is greater than the first thickness.

11. The pair of smart glasses of any one of claims 8 to 10, further comprising a mirror assembly configured to transmit optical information from the display projector assembly to the waveguide via one or more mirrors.

12. The pair of smart glasses of any one of claims 8 to 11, wherein the lens and the display projector assembly are coupled via a liquid optically clear adhesive.

13. The pair of smart glasses of any one of claims 8 to 12, wherein the lens adjusts an image from the waveguide so that the visual information presented via the waveguide appears a specified distance from a wearer of the smart glasses.

14. A method of presenting visual information via a pair of smart glasses, the smart glasses comprising a frame, a display projector assembly, a lens, and a waveguide, the method comprising:
projecting, by the display projector assembly, visual information to the waveguide along a projection axis aligned with a display window of the waveguide, wherein the visual information is projected across a gap separating the display projector assembly from the waveguide along the projection axis;
presenting, via the visual information projected from the display projector assembly to the waveguide, a smart-glasses experience; and
dampening, via the lens, vibrations from the display projector assembly to the waveguide, wherein:
the waveguide is coupled to the lens;
the lens comprises a first material having a first shape with a first toughness;
the first shape of the lens exposes the display window of the waveguide to the display projector assembly;
the waveguide comprises a second material having a second shape with a second toughness; and
the first material has a greater toughness than the second material.

15. The method of claim 14, wherein:
the first shape comprises a cutout along the projection axis, such that the visual information is transmitted from the display projector assembly to the waveguide without passing through the lens;
the lens comprises a first portion configured to pass the visual information output by the waveguide and a second portion configured to dampen the vibrations to the waveguide; and
the first portion of the lens has a first thickness, and the second portion of the lens has a second thickness that is greater than the first thickness.
